# EUROPÄISCHE PATENTSCHRIFT

(11) **EP 0 587 063 B1**
(45) Veröffentlichungstag und Bekanntmachung des Hinweises auf die Patenterteilung: **02.11.1995**
(21) Anmeldenummer: 93114140.2
(22) Anmeldetag: 03.09.1993
(51) Int. Cl.: B60P 1/34

(54) **Lastfahrzeug mit Schüttgut-Container**
Utility vehicle with bulk containers
Véhicule utilitaire avec conteneurs pour matériaux en vrac

(30) Priorität: 05.09.1992 DE 9212000 U
(43) Veröffentlichungstag der Anmeldung: 16.03.1994
(73) Patentinhaber: FELDBINDER & BECKMANN FAHRZEUGBAU oHG, D-21423 Winsen (DE)
(72) Erfinder: Beckmann, Jan-Dirk, D-21423 Winsen/Luhe (DE); Feldbinder, Otto, D-3044 Neuenkirchen (DE)
(74) Vertreter: Richter, Werdermann & Gerbaulet

(56) Entgegenhaltungen:
- CH-A- 334 883
- FR-A- 1 326 865
- FR-A- 2 190 636
- US-A- 2 929 658

## Beschreibung

Die Erfindung betrifft ein Lastfahrzeug mit mehreren auf einem Rahmengestell aufliegenden hintereinander angeordneten Schüttgut-Container, von denen mindestens zwei Schüttgut-Container seitlich kippbar sind und von denen mindestens ein Schüttgut-Container ein Trichterbehälter ist, der einen oder mehrere untere Auslässe aufweist. Ein solches Lastfahrzeug ist aus der CH-A-33 48 83 bekannt.

Nach dem Stand der Technik sind beispielsweise Muldenkipper bekannt, mit denen Schüttgüter wie Sand,Erde oder Bauschutt aufgenommen und am Bestimmungsort abkippbar ist, wozu das Kraftfahrzeug über eigene, meist hydraulisch angetriebene Hubwerke verfügt, die den kippbaren Behälter um bis zu etwa 40° schwenken bzw. einseitig anheben. Die Kippung erfolgt entweder seitlich oder nach hinten.

Bekannt ist auch ein Hebekippfahrzeug zum Befördern von Schüttgut, bei dem auf dem Fahrgestell zwei mit Hilfe jeweils einer Hubeinrichtung zueinander kippbare Behälter angeordnet sind, von denen jeder in der Nähe des Bodens an den einander zugekehrten Stirnwänden eine Entladevorrichtung aufweist (DE-A- 15 80 094, DE-A- 17 80 598).

Ein Sattelanhänger mit mehreren auf einem Rahmengestell hintereinander aufliegend angeordneten Schüttgut-Containern, die alle in gleicher Weise seitlich kippbar sind, ist aus der US-A-37 11 157 bekannt.

Bekannt sind auch sog. Sattelschlepper mit einer Zugmaschine und einem Sattelanhänger, der Spezialaufbauten besitzt, z.B. Silobehälter zur Aufnahme von flüssigem oder festem Schüttgut, die von oben befüllbar und über einen unteren Austrag entleerbar sind. Die Sattelschlepper haben gegenüber der starr ausgebildeten Lastkraftwaren den Vorteil, wendefähiger zu sein, darüber hinaus kann die Zugmaschine ggt. auch ausgetauscht bzw. für andere Sattelanhänger verwendet werden (US-A-4,009,906).

Die FR-A-21 90 636 zeigt ein Lastfahrzeug mit zwei auf dem Rahmengestell aufliegenden und hintereinander angeordneten Schüttgut-Containern, die eine zueinander unterschiedliche Ladekapazität aufweisen.

Bei dem aus der CH-A-334 883 bekannten Lastfahrzeug sind drei Schüttgut-Container hintereinander auf dem Rahmen angeordnet. Dabei sind die Schüttgut-Container seitlich kippbar angeordnet, und zwar mittels eines Hydraulikstempels. Außerdem weist mindestens ein Behälter eine unterseitig angeordnete Schleuse zur Austragung von Schüttgut auf.

Das aus FR-A-13 26 865 bekannte Lastfahrzeug zeigt einen Lastbehälter, der eine seitlich angeordnete schwenkbare Klappe aufweist, die arretierbar ist.

Die US-A-29 29 658 zeigt einen Sattelanhänger, auf dem mehrere hintereinander angeordnete Schüttgut-Container seitlich kippbar angeordnet sind.

Ein großes Problem im Transportwesen stellt die unzureichende Auslastung der Kraftfahrzeuge dar, die meist schon dadurch bedingt ist, daß die Lastfahrzeug-Container nur für eine Werkstoffsorte bzw. eine Art von Schüttgut benutzt werden können. Beispielsweise kann ein Transportbehälter für Sand nicht für hiermit hergestellte weiter verarbeitete Produkte wie Ton-Pulvermischungen verwendet werden, da dies zu jeweiligen Verunreinigung führen würde. Abhilfe könnte lediglich dadurch geschaffen werden, daß nach dem Entladen am Bestimmungsort die jeweiligen Container gereinigt werden, um sie für ein weiterverarbeitetes Produkt aufnahmefähig zu machen. Abgesehen davon, daß Reinigungsarbeiten zeitlich sehr aufwendig sind, stehen am Entladungsort meist auch keine geeigneten Reinigungsvorrichtungen bzw. Geräte zur Verfügung. Somit bleibt es meist dabei, daß ein Lastfahrzeug nach dem Entladen des mitgeführten Produktes leer zurückfährt, um eine neue gleichartige Ladung aufzunehmen oder um dem Container vor Aufnahme einer andersartigen Ladung zu reinigen.

Es ist Aufgabe der vorliegenden Erfindung, ein Lastfahrzeug der eingangs genannten Art dahin weiterzuentwickeln, daß ohne zwischenzeitliche Reinigung zwei verschiedene Produkte auf dem Hin-und/oder Rückweg mitgeführt werden können.

Diese Aufgabe wird durch die in Anspruch 1 gekennzeichneten Merkmale gelöst.

Hierbei ist vorgesehen, daß mehrere Schüttgut-Container hintereinander angeordnet sind. Von diesen weisen mindestens zwei der Schüttgut-Container eine zueinander unterschiedliche Ladekapazität und der oder die mittig angeordneten

Schüttgut-Container besitzen eine Ladekapazität, die etwa gleichgroß der Summe der Ladekapazität der davor und dahinter angeordneten übrigen Schüttgut-Container ist. Die Schüttgut-Container sind jeweils getrennt zu füllen bzw. zu entladen, wobei je nach Schüttgut und maximal zulässigem Gesamtgewicht nur ein Teil der Schüttgut-Container auf der Hinfahrt beladen wird und der andere Teil aud der Rückfahrt, beispielsweise mit weiter verarbeiteten anderen Schüttgut-Produkten. Das Schüttgut kann aus Fest- oder Flüssigkörpern bestehen.

Weiterbildungen der Erfindung sind in den Unteransprüchen beschrieben. So werden vorzugsweise drei Schüttgut-Container hintereinander angeordnet, wobei nach einer konkreten weiteren Ausführungsform der Erfindung der oder die mittig angeordnete(n) Schüttgut-Container eine Ladekapazität besitzt (besitzen), die etwa gleichgroß der Summe der Ladekapazität der davor und dahinter angeordneten übrigen Schüttgut-Container ist. Bei drei Schüttgut-Contern kann somit beispielsweise Quarzsand in dem mittigen Schüttgut-Container auf der Hinfahrt unter Ausnutzung der Maximal zulässigen Ladekapazität geladen werden, wobei der vordere und hintere Container unbefüllt sind.

An dem Bestimmungsort wird Quarzsand abgeladen und das Weiterverarbeitungsprodukt, beispielsweise Ton, in den vorderen und hinteren Schüttgut-Container gefüllt, wobei der mittige Container ( auf der Rückfahrt) leer bleibt. Der vordere und hintere Schüttgut-Container werden hierbei ebenfalls unter Ausnutzung der maximal zulässigen Ladekapazität befüllt. Die beschriebene Ausgestaltung hat auch den Vorteil einer relativ gleichmäßigen Gewichtsauslastung des Lastfahrzeuges.

Die Ausbildung der einzelnen Schüttgut-Container richtet sich nach der Art des aufzunehmenden Schüttgutes, wobei die jeweiligen Schüttgut-Container auch unterschiedlich ausgebildet sein können, also offen, geschlossen, mit besonderen Ein- und Auslässen versehen. Grundsätzlich können alle nach dem Stand der Technik im Prinzip bekannten Schüttgut-Container verwendet werden. Nach einer konkreten Ausführungsform der Erfindung sind die vor und hinter dem mittigen Schüttgut-Container angeordneten Schüttgut-Container seitlich kippbar, vorzugsweise mit einem Kippwinkel bis zu 50^{o}. Die Kippung wird mittels mindestens eines Hydraulikstempels pro kippbarem Schüttgut-Container eingeleitet. Vorzugsweise besitzt jeder kippbare Schüttgut-Container eine seitlich angeordnete schwenkbare Klappe, die zum Kippen dearretierbar ist, beispielsweise durch Lösen eines Arretierungsbolzens o.ä..

Nach einer weiteren Ausgestaltung der Erfindung ist einer der Schüttgut-Container, vorzugsweise der mittig angeordnete, ein Trichterbehälter, der einen oder mehrere untere Auslässe aufweist.

Das Lastfahrzeug kann mit einem Eigenantrieb ausgestattet sein, jedoch wird die Ausbildung als ein- oder mehrachsiger Anhänger bevorzugt, da hierdurch die Rangierfähigkeit verbessert wird. Insbesondere wird der Anhänger ein Sattelanhänger sein.

Ein Ausführungsbeispiel der Erfindung ist in den Zeichnungen dargestellt. Es zeigen
- **Fig.1**: eine Seitenansicht eines erfindungsgemäßen Sattelanhängers,
- **Fig.2**: eine Rückansicht, und
- **Fig.3**: dieselbe Ansicht mit gekipptem hinteren Schüttgut-Container.

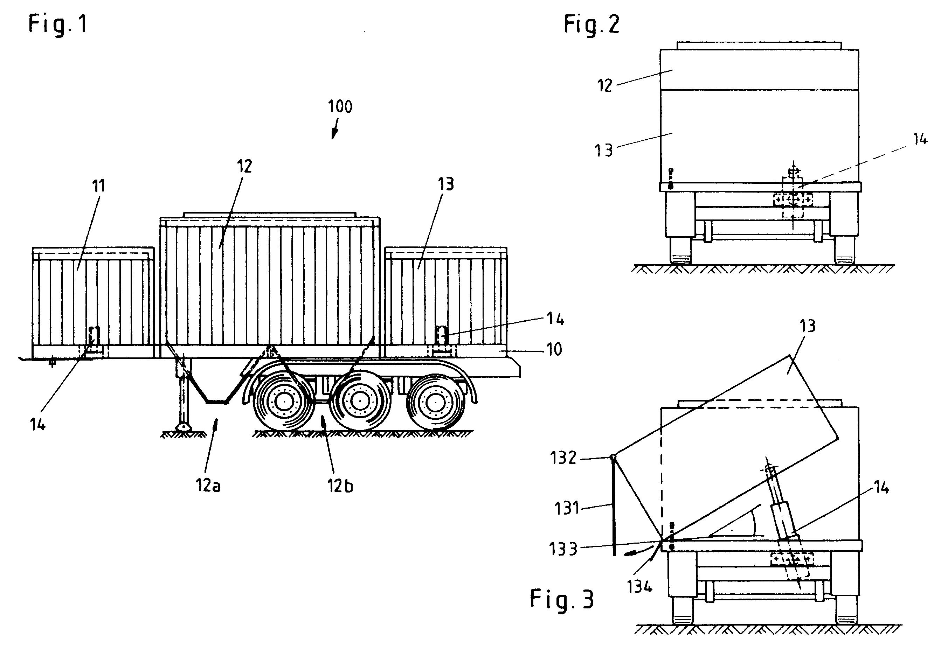

Der konstruktive Aufbau von Anhängern, insbesondere Sattelanhängern oder auch mit einem Antrieb ausgestatteten Lastfahrzeugen ist nach dem Stand der Technik bekannt. Der in Figur 1 dargestellte dreiachsige Sattelanhänger 100 trägt auf seinem Rahmen 10 drei hintereinander angeordnete Schüttgut-Container 11,12,13, wobei der vordere und der hintere Schüttgut-Container 11 und 13 als kippbare Behälter ausgebildet sind, während der mittlere Schüttgutbehälter 12 ein Trichterbehälter mit unteren Auslässen 12a,12b ist.

Die Aufnahmefähigkeit des mittleren Schüttgut-Containers 12 ist volumenmäßig etwa doppelt so groß wie die der jeweiligen Aufnahmefähigkeit der Schüttgut-Container 11 und 13, die im vorliegenden Fall gleich groß sind. Hierdurch ist es möglich, bis zu drei verschiedene Produkte gleichzeitig zu transportieren oder jeweils unter Ausnutzung der Ladekapazität nur einen, nämlich den mittleren, oder zwei, nämlich den vorderen und den hinteren Schüttgut-Container zu befüllen und den oder die übrigen auf der Rückfahrt, beispielsweise dergestalt, daß Vorprodukte auf der Hinfahrt transportiert und weiterverarbeitete Zwischen- oder Endprodukte auf der Rückfahrt befördert werden.

Wie aus Figuren 1 bis 3 weiterhin ersichtlich ist, besitzen die Schüttgut-Container 11 und 13 jeweils einen Hydraulikstempel 14, womit die Schüttgut-Container 11 und 13 seitlich um die dortige Achse kippbar sind. Eine Entleerung der Schüttgut-Container 11 und 13 wird dadurch ermöglicht, daß jeder dieser Behälter eine seitliche Klappe 131 aufweist, die um die Achse 132 schwenkbar gelagert ist. Seitlich sind Schütten 134 vorgesehen, mit denen das Schüttgut vom Fahrzeug weggeleitet wird. Die Schütte wird mittels nicht dargestellter Bolzen arretiert bzw. durch Lösen der Bolzen geöffnet, wobei die Schütte die Klappe 131 arretiert und bei einer Kippung des Schüttgut-Containers 13, entsprechend Figur 3, die Klappe 131 schwerkraftbedingt öffnet. Der Schwenkwinkel 133 beträgt etwa 45^{o}.

## Patentansprüche

1. Lastfahrzeug mit mehreren auf einem Rahmengestell (10) aufliegenden hintereinander angeordneten Schüttgut-Containern (11,12,13), von denen mindestens zwei Schüttgut-Container (11,13) seitlich kippbar sind und von denen mindestens ein Schüttgut-Container (12) ein Trichterbehälter ist, der einen oder mehrere untere Auslässe (12a,12b) aufweist,
dadurch gekennzeichnet,
daß mindestens zwei der Schüttgut-Container (11,12, 13) eine zueinander unterschiedliche Ladekapazität aufweisen und
daß der oder die mittig angeordnete(n) Schüttgut-Container (12) eine Ladekapazität besitzt (besitzen), die etwa gleichgroß der Summe der Ladekapazität der davor und dahinter angeordneten übrigen Schüttgut-Container (11,13) ist.

2. Lastfahrzeug nach Anspruch 1,
dadurch gekennzeichnet,
daß drei Schüttgut-Container (11 bis 13) hintereinander angeordnet sind.

3. Lastfahrzeug nach einem der Ansprüche 1 oder 2,
dadurch gekennzeichnet,
daß die vor und hinter dem (den) mittigen Schüttgut-Container(n) (12) angeordneten Schüttgut-Container (11,13) seitlich kippbar sind, vorzugsweise mit einem Kippwinkel (133) bis zu 50^{o} und daß jeweils mindestens ein Hydraulikstempel (14) pro kippbarem Schüttgut-Container (11,13) vorgesehen ist.

4. Lastfahrzeug nach Anspruch 3,
dadurch gekennzeichnet,
daß die kippbaren Schüttgut-Container (11,13) eine seitlich angeordnete schwenkbare Klappe (131) aufweisen, die zum Kippen dearretierbar ist.

5. Lastfahrzeug nach einem der Ansprüche 1 bis 4,
dadurch gekennzeichnet,
daß jeder der mittigen, mittig angeordneten Schüttgut-Container (12), ein Trichterbehälter ist, der einen oder mehrere untere Auslässe (12a,12b) aufweist.

6. Lastfahrzeug nach einem der Ansprüche 1 bis 5,
dadurch gekennzeichnet,
daß es als ein- oder mehrachsiger Anhänger ausgebildet ist.

7. Lastfahrzeug nach Anspruch 6,
dadurch gekennzeichnet,
daß der Anhänger ein Sattelanhänger (100) ist.

## Claims

1. A utility vehicle comprising several bulk containers (11,12,13) supported on a framework and arranged one after the other, at least two bulk containers (11,13) thereof being tiltable at the side and at least one bulk container (12) thereof being a funnel container which includes one or more bottom-side outlets (12a,12b),
characterized in
that at least two of the bulk containers (11,12,13) have a loading capacity being different to one another and
that the centrally arranged bulk container(s) (12) has (have) a loading capacity which is approximately as large as the total of the loading capacity of the other bulk containers (11,13) arranged before and behind said centrally arranged bulk container(s).

2. The utility vehicle according to claim 1,
characterized in
that three bulk containers (11 to 13) are arranged one after the other.

3. The utility vehicle according to any of the claims 1 or 2,
characterized in
that the bulk containers (11,13) arranged before and behind the centrally arranged bulk container(s) (12) are tiltable at the side, preferably at an angle of inclination (133) of up to 50°, and that at least one hydraulic plunger (14) for each tiltable bulk container (11,13) is provided.

4. The utility vehicle according to claim 3,
characterized in
that the tiltable bulk containers (11,13) comprise a tiltable side-gate (131) which can be unlocked for tilting.

5. The utility vehicle according to any of the claims 1 to 4,
characterized in
that each of the central, centrally arranged bulk containers (12) is a funnel container which comprises one or more bottom-side outlets (12a,12b).

6. The utility vehicle according to any of the claims 1 to 5,
characterized in
that it is defined as a single-axis or multiaxis trailer.

7. The utility vehicle according to claim 6,
characterized in
that the trailer is a semitrailer (100).

## Revendications

1. Véhicule utilitaire avec plusieurs conteneurs pour matériaux en vrac (11, 12, 13), placés l'un derrière l'autre, appuyés sur un châssis (10), parmi lesquels au moins deux conteneurs pour matériaux en vrac (11, 13) sont basculants latéralement et parmi lesquels au moins un conteneur pour matériaux en vrac (12) est un conteneur à trémie qui présente une ou plusieurs sorties inférieures (12a, 12b),
**caractérisé en ce**
qu'au moins deux des conteneurs pour matériaux en vrac (11, 12, 13) présentent une capacité de charge différente l'un par rapport à l'autre et
que le ou les conteneur(s) (12) placé(s) au milieu posséde(nt) une capacité de charge qui est égale à la somme de la capacité de charge des autres conteneurs pour matériaux en vrac (11, 13) placé(s) devant et derrière.

2. Véhicule utilitaire selon la revendication 1,
**caractérisé en ce**
que trois conteneurs pour matériaux en vrac (11 à 13) sont placés l'un derrière l'autre.

3. Véhicule utilitaire selon l'une des revendications 1 ou 2,
**caractérisé en ce**
que les conteneurs pour matériaux en vrac (11, 13) placés devant et derrière le(les) conteneur(s) pour matériaux en vrac placé(s) au milieu (12) sont basculants latéralement, de préférence avec un angle de basculement (133) jusqu'à 50° et que respectivement au moins un piston hydraulique (14) est prévu par conteneur pour matériaux en vrac (11, 13) basculant.

4. Véhicule utilitaire selon la revendication 3,
**caractérisé en ce**
que les conteneurs pour matériaux en vrac (11, 13) basculants présentent un abattant (131) pivotant, placé latéralement, qui est déblocable pour le pivotement.

5. Véhicule utilitaire selon l'une des revendications 1 à 4,
**caractérisé en ce**
que chacun des conteneurs pour matériaux en vrac (12) du milieu, placé au milieu, est un conteneur à trémie qui présente une ou plusieurs sorties inférieures (12a, 12b).

6. Véhicule utilitaire selon l'une des revendications 1 à 5,
**caractérisé en ce**
qu'il est configuré comme une remorque à un ou à plusieurs essieux.

7. Véhicule utilitaire selon la revendication 6,
**caractérisé en ce**
que la remorque est une semi-remorque (100).
